# EUROPEAN PATENT APPLICATION

(11) **EP 2 037 390 A1**
(43) Date of publication of application: **18.03.2009**
(21) Application number: 08003797.1
(22) Date of filing: 29.02.2008
(51) Int. Cl.: G06F 21/24, G06F 21/02

(54) **System and method of protecting content of an electronic file for sending and receiving**

(30) Priority: 13.09.2007 US 900667
(71) Applicant: Cobelo, Patricio Lucas, Miami FL 33176 (US); Diaz, Jr., Angel, Miami FL 33243 (US)
(72) Inventor: Cobelo, Patricio Lucas, Miami FL 33176 (US); Diaz, Jr., Angel, Miami FL 33243 (US)
(74) Representative: Wagner, Karl H.

(57) **Abstract**

A system and method of protecting the content of an electronic file for sending and receiving. The invention includes providing unique local encryption key data correspondingly associated with a sender, and providing unique remote encryption key data correspondingly associated with a receiver. In addition, the method includes orienting the electronic file in an encrypted mode by utilizing at least one set of the unique local encryption key data and at least one set of the remote encryption key data.

## Description

### BACKGROUND OF THE INVENTION

### Field of the Invention

The present Invention is directed to a system and method of protecting the content of an electronic file for sending and receiving. In particular, the present invention is structured to facilitate the protection of computer files and the contents contained therein using one or more portions or sets of unique, non-reproducible encryption key data, and at least one encryption algorithm.

### DESCRIPTION OF THE RELATED ART

There are various known techniques and methods used to encrypt computer files and/or the content contained therein. Such techniques and/or methods are utilized typically as an attempt to strictly limit access only to authorized individuals. For example, the Advanced Encryption Standard (hereinafter, "AES"), otherwise known as Rijndael, is a commonly known encryption standard utilized by individuals, companies, and governments throughout the World. It is also worth noting that AES is considered to be a successor to the well-known Data Encryption Standard ("DES"), which was/is also utilized worldwide on a large-scale basis.

Once a file has been encrypted, in order to access, read, interpret, or otherwise use the file or the contents contained therein, an individual or computer must have authorization to do so. Generally, such authorization may be defined by an individual or computer being in possession of encryption/decryption software or algorithm and/or a predetermined "key". It should be apparent that, in the art of cryptology, controlling or limiting the access to, or knowledge of, the "key" is an important aspect.

As computer technology and computing power continues to evolve, the ability for an unauthorized individual and/or computer to access the "key", or otherwise regenerate the data therein becomes easier and more likely. Moreover, because governmental entities use encryption techniques to protect highly confidential information and material, the unauthorized access of such files may have devastating consequences. Accordingly, there is a current need in the art of cryptography for a system and method of protecting the contents of an electronic file by utilizing at least one set of unique, non-reproducible encryption key data. Moreover, the encryption key data is preferably random data maintained, held, or otherwise located within a key file. It would be beneficial if the proposed system and method includes utilizing a selected contiguous block of encryption key data from the key file beginning at a random location. It would be further advantageous if the key file, encryption software, and/or other files of the various embodiments of the proposed system and method are maintained on and/or executable within a removable memory device. As such, unauthorized access to and/or tracing of the unique encryption key data, key file(s), encryption algorithm(s), and/or other files is further limited or completely eliminated.

It would further be beneficial for at least one embodiment of the proposed system and method to also include at least one set of publicly accessible encryption key data correspondingly associated with each user, whereas the set of publicly accessible encryption key data is defined as data shared between various pre-authorized users, such as for example a sender and a receiver. Accordingly, to facilitate sharing of electronic files between authorized users, it would be particularly beneficial if the proposed system and method includes encrypting the designated electronic file(s) at least once utilizing a set of the sender's publicly accessible local encryption key data, and at least once again utilizing a set of the receiver's publicly accessible remote encryption key data.

### SUMMARY OF THE INVENTION

The present invention is directed to a system and method of protecting the content of an electronic file for sending and receiving. The computer(s) of the various embodiments of the present invention include, but are in no way limited to, a desktop computer, laptop or notebook computer, handheld computer, Personal Digital Assistant ("PDA"), cellular telephone, etc. In addition, the one or more electronic files of the present invention include any computer readable block or set of information, which may contain text, graphics, audio, and/or video data.

At least one embodiment of the present invention includes one or more memory devices structured to be disposed in communicative relation with the one or more computers. In particular, the memory device(s) may be connected to the computer(s) through an interface, such as, for example, Universal Serial Bus ("USB"), FireWire, etc., or through a network, such as, the Internet or BlueTooth.

In addition, the various embodiments of the present invention include at least one set of encryption key data, such as, local encryption key data maintained, held, or otherwise located within at least one computer-readable local key file. For example, the local key file may include a text file having random data contained therein, for example, in the form of numbers and/or letters. At least for portability and security purposes, the local encryption key data, in a preferred embodiment, is stored on the one or more memory devices described above. Further, because of the randomness of the local encryption key data, in at least one preferred embodiment of the present invention, the same set of local encryption key data cannot be subsequently reproduced, regenerated, or replicated. The uniqueness and non-reproducible nature of the local encryption key data is particularly beneficial as added security for the finally encrypted file, as will be explained in detail herein.

The method of one embodiment of the present invention includes connecting the memory device to the computer, for example, through a hardware interface or a network, as described above. Further, connecting the memory device to the computer may prompt a user to input or otherwise communicate identifying information, such as a password, prior to accessing the content on the memory device and/or computer.

In addition, the present invention further includes the step of generating the local encryption key data. Moreover, the local encryption key data may be generated the first time the corresponding memory device is connected to a computer. However, the various embodiments of the present invention may generate the local encryption key data at any time, such as at the request of a user. Either way, in at least one embodiment, the local encryption key data is generated only one time, and, as above, cannot be reproduced.

Furthermore, in a preferred embodiment, the method of the present invention includes extracting or selecting at least one portion or set of local encryption key data from the local key file. The set of the local encryption key data may include, for example, the entire key file, or any part thereof, whether contiguous or non-contiguous relative to a starting point. Furthermore, the present invention may include the step of generating a random local key offset value. In particular, the local key offset value may at least partially represent or define the portion or set of the local encryption key data to extract or designate. For exemplary purposes only, the local key offset value may be representative of the starting point within the local key file. In addition, for added security, the extracted portion or set of the local encryption key data may be modified, for example, by applying a formula or set of formulas thereto. In such an embodiment, the present invention further includes a modified portion or set of the local encryption key data.

The various embodiments of the present invention further include extracting or selecting a portion of a predetermined size from the electronic file to be encrypted. The' portion of the electronic file may start at a position at or near the beginning of the file; however, any starting point may be implemented. Similarly, the portion may be contiguous or non-contiguous relative to, for example, a starting point.

In addition, the present invention includes the step of encrypting the electronic file, or otherwise orienting the electronic file in an encrypted mode. The encryption may be executed by utilizing one or more look-up tables and one or more encryption formulas or algorithms. Specifically, the look-up table(s) of the present invention may be defined as either the set of local encryption key data, or the modified set of local encryption key data, as described above. In addition, the encryption algorithm(s) may include any formula structured to facilitate the practice of the present invention in the intended fashion. For example, the formula(s) may include the Data Encryption Standard ("DES"), Advanced Encryption Standard ("AES"), or any other formula preferably utilizing a look-up table in one or more steps therein.

The various steps of the present invention may be repeated as necessary in order to facilitate encrypting of the electronic file, or portions thereof. Specifically, in at least one embodiment, each time a new portion of the electronic file is extracted, a new local key offset value is generated, and a new set or portion of the local encryption key data is extracted or designated. However, in yet another embodiment, as subsequent portions of the electronic file are extracted, the same offset value and the same set of local encryption key data are utilized to encrypt the newly extracted portion of the electronic file.

In addition, in yet another embodiment, the method of the present invention facilitates a user securely sending or transferring one or more electronic files to another user and/or himself or herself. In such an embodiment, the present invention includes encrypting an electronic file utilizing one or more sets of local encryption key data, and one or more sets of remote encryption key data. In particular, the local encryption key data is preferably associated with the sender, such as, for example, located within a local key file disposed on the sender's computer or memory device, and/or generated specifically by or for the sender. Similarly, the remote encryption key data is preferably associated with the receiver, such as, for example, located within a remote key file disposed on the receiver's computer or memory device, and/or generated by or for the receiver. Moreover, the local and/or remote encryption key data, in such an embodiment, are preferably publicly accessible, or at least accessible by the sender, receiver, and/or a set of authorized users.

In particular, the electronic file may be encrypted by utilizing a set of local encryption key data and the various other steps described above. The electronic file may again be encrypted with a set of remote encryption key data. Accordingly, in order to decrypt the encrypted file in such an embodiment, both the remote and local encryption key data, as well as the encryption formula(s), and local and/or remote offset values must be accessible, known, or regenerated. An authorized user or an authorized user's computer is structured to have access to all necessary information to decrypt the encrypted file.

These and other objects, features and advantages of the present invention will become more clear when the drawings as well as the detailed description are taken into consideration.

### BRIEF DESCRIPTION OF THE DRAWINGS

For a fuller understanding of the nature of the present invention, reference should be had to the following detailed description taken in connection with the accompanying drawings in which:
Figure 1 is a schematic representation of one embodiment of a system of protecting content of an electronic file of the present invention.
Figure 1a is a schematic representation of another embodiment of the system of protecting content of an electronic file of the present invention.
Figure 2 is a high-level flow chart of one embodiment of the method of protecting content of an electronic file of the present invention.
Figure 3 is a schematic representation of yet another embodiment of the present invention.
Figure 3a is a schematic representation of a variation of the embodiment illustrated in Figure 3.
Figure 4 is a high-level flow chart of another embodiment of the method of protecting content of an electronic file of the present invention.
Like reference numerals refer to like parts throughout the several views of the drawings.

### DETAILED DESCRIPTION OF THE PREFERRED EMBODIMENT

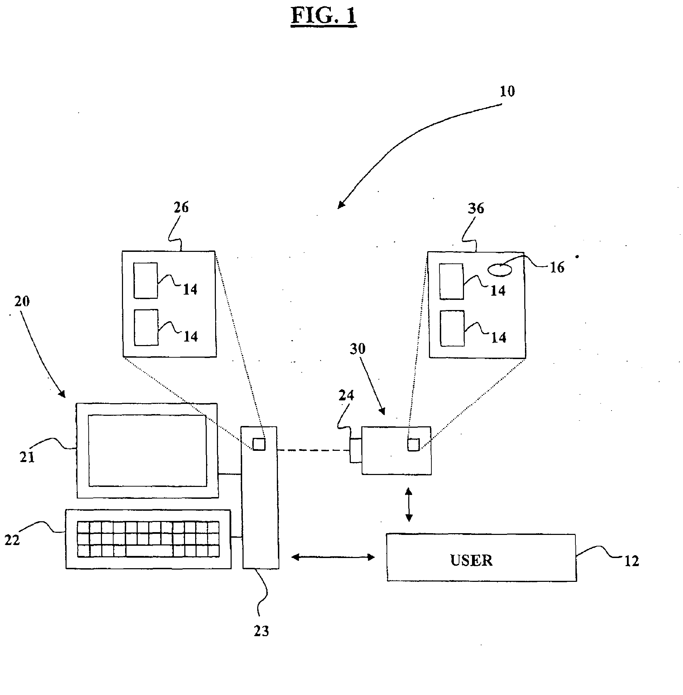

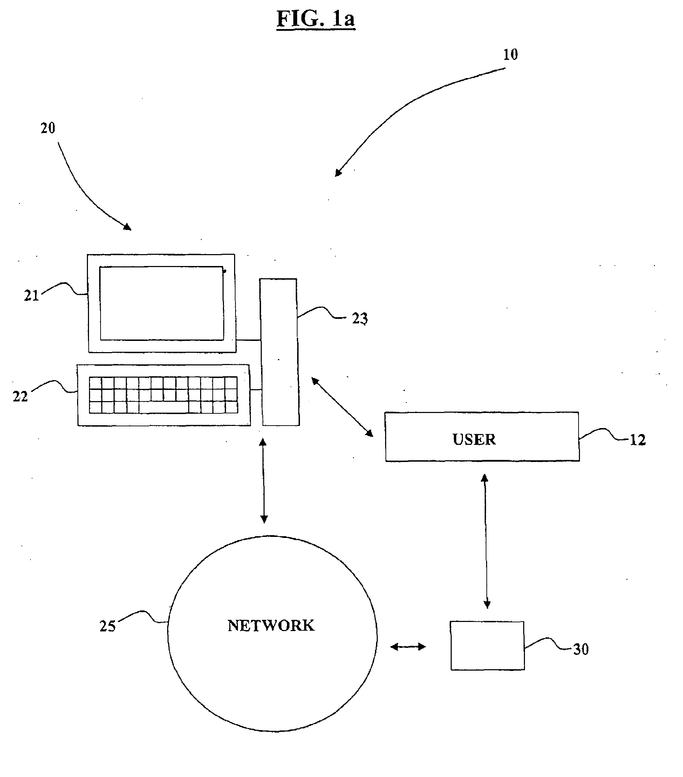

As shown in the accompanying drawings, and primarily Figure 1, the present invention is directed to a system and method of protecting the content of an electronic file for sending and receiving using one or more computers 20. The system is generally indicated as 10 throughout the Figures. The computer 20 may be virtually any electronic device structured to read, write, interpret, and/or display various computer or electronic instruction sets. For example, the computer 20 may include, but is in no way limited to, a mainframe computer, desktop computer, laptop or notebook computer, handheld computer, Personal Digital Assistant ("PDA"), cellular telephone, video game console, etc. For illustrative purposes only, Figures 1 and 1a show a computer 20 having a display device 21 and an input device or keyboard 22 disposed in communicative relation with a processor assembly 23. In particular, the display device 21 may include a computer monitor, television monitor, or any other type of video and/or graphic display assembly. Moreover, the processor assembly 23 preferably includes a central processing unit ("CPU") capable of reading and/or manipulating computer data.

In addition, the one or more computers 20 of the present invention may be structured to correspond to, or be associated with one or more users 12. In particular, each computer 20 may require a user 12 to identify himself or herself by typing in, or otherwise communicating a password, or other identifying information prior to accessing, viewing, or manipulating the contents therein. In a preferred embodiment, the user 12 may communicate the password or other identifying information through a peripheral device such as a keyboard 22. However, any device structured to facilitate the practice of the present invention in the intended fashion may be implemented. Furthermore, as should be apparent, if the communicated information accurately corresponds to one or more passwords or other identifying information corresponding to the particular computer 20, the user 12 is permitted to access the computer 20 and/or the contents, programs, files, etc. therein.

The various embodiments of the present invention further include one or more memory devices 30. In particular, the memory devices 30 of the present invention are structured to hold various amounts and types of electronic or computer readable and/or executable content, and are preferably portable and supported by virtually any operating system. As such, the memory devices 30 of the various embodiments of the present invention include, for example, portable hard drives, flash drives, memory cards, key fobs, etc.

Further, the memory device(s) 30 are structured to be removably disposed in a communicative relation, whether directly or indirectly, with the one or more computers 20. Accordingly, as shown in Figure 1, the memory device(s) 30 may be connected directly to the computer 20 utilizing any interface connection 24, such as, for example, Universal Serial Bus ("USB"), FireWire, Ethernet, Serial Port, Parallel Port, etc. As illustrated in Figure 1a, it is also contemplated that the memory device(s) 30 may be connected to the computer 20, through one or more network interfaces 25, such as, for example, the Internet, a Local Area Network ("LAN"), Wide Area Network ("WAN"), and/or a Personal Area Network ("PAN"), utilizing, for example, the BlueTooth specification.

Similar to the computer 20, the memory device (s) 30 of at least one embodiment of the present invention are structured to require a user 12 to identify himself or herself prior to gaining access to the contents of the particular corresponding memory device(s) 30. Accordingly, in at least one embodiment, subsequent to disposing the memory device(s) 30 in communicative relation with the computer 20, the user 12 may be required to accurately communicate first authentication data, such as one or more passwords or other identifying information to access the corresponding memory device(s) 30 including the files or other content disposed thereon.

In at least one embodiment of the present invention, the one or more computers 20, such as a first computer, are correspondingly associated with or otherwise structured to be used in conjunction with one or more memory device(s) 30. Specifically, the memory devices 30 of the various embodiments of the present invention include a unique identifier, such as, for example, a sequence of alpha-numeric characters corresponding to a serial number unique to each individual memory device 30. However, any unique identifier or other identification data structured to facilitate the practice of the present invention in the intended fashion may be implemented. In addition, the one or more computers 20 of such an embodiment are structured to recognize, view, or otherwise analyze the unique identifier of the corresponding memory device 30, for example, upon disposing the memory device 30 in communicative relation with the computer 20. The computer 20 may be pre-programmed or otherwise structured to accept one or more memory devices 30 having specific predetermined serial numbers or other identifiers. Accordingly, in at least one embodiment, upon disposing a memory device 30 in communicative relation with a computer 20, the computer 20 is structured to read or otherwise analyze the unique identifier of the particular memory device 30. If the computer 20 is associated with the memory device 30 such that the computer 20 is structured to accept the particular memory device 30, the user 12 need not be required to enter a password prior to examining the contents on the corresponding memory device 30. If, however, the computer 20 is not associated with the particular memory device 30 such that the computer 20 does not recognize the corresponding serial number or other identification data, or the computer is not structured or pre-programmed to accept the particular memory device 30, then, in at least one embodiment, the user 12 is required to communicate a password or other identifying information, as explained above, prior to accessing the contents on the memory device 30 and/or computer 20.

As such, in at least one embodiment, the memory device(s) 30 may act as a key to corresponding computers 20. Specifically, the memory device(s) 30 may be structured to dispose the one or more computers 20 in an activated and/or inactivated state, such as, for example, by "locking" and/or "unlocking" the one or more corresponding computers 20. In particular, if a memory device 30 is disposed in communicative relation with an associated computer 20, as explained immediately above, the computer 20 is activated or "unlocked", and the user 12 need not enter a password or other identifying information to access the contents of the corresponding computer 20. Additionally, in at least one embodiment, disposing a memory device 30 in communicative relation with an associated computer will turn the computer 20 on or otherwise activate the computer 20 from being in an inactive or sleeping mode. Similarly, if a memory device 30 is removed from being disposed in communicative relation with a computer 20, the corresponding computer 20 of at least one embodiment is automatically "locked", turned off, or set to an inactivated state such that the user 12, or anyone, cannot access the contents of the corresponding computer 20 without "unlocking" or otherwise activating it. A user 12, or other individual, may "unlock" the computer by communicating a password or other identifying information, or by disposing an associated or corresponding memory device 30 in communicative relation thereto, as explained above.

The system 10 of at least one embodiment of the present invention further includes one or more electronic files 14 to be encrypted or otherwise protected from unauthorized access. As referred to herein, an electronic file 14 may include any computer-readable block or set of information having virtually any size and containing virtually any sort of data. For example, at a high-level, the electronic file 14 may contain any amount of textual, graphical, visual, and/or audible data. Referring again to Figure 1, as best shown by extended boxes 26 and 36, the file 14 may be stored, saved, or otherwise disposed on or within the computer 20 and/or memory device(s) 30, respectively. In at least one embodiment, however, prior to encrypting/decrypting the electronic file 14, or otherwise running or executing the respective encryption or decryption software application, the process of which is explained in detail below, the user 12 is required to communicate a password or other identifying information. Specifically, prior to accessing or running an encryption program, formula, or other like instruction set(s), the user 12 in at least one embodiment must accurately identify himself or herself as an authorized user.

Furthermore, the various embodiments of the present invention include one or more sets of local encryption key data maintained, held, and/or otherwise located within at least one local key file 16. The local key file 16 may include a predetermined selected size, for example, one Megabyte (1 MB). As will be explained in greater detail below, at least one embodiment of the present invention further includes one or more sets of remote encryption key data maintained, held, or otherwise located within at least one remote key file 18. In particular, the local encryption key data is represented and/or defined by various bytes of random data. In at least one embodiment, the local key file 16 is represented as a text file defined by the various characters, integers, binary numbers, hexadecimal numbers, etc. of the local encryption key data. As will be explained in greater detail below, in at least one preferred embodiment of the present invention, the local encryption key data is generated only once, for example, the very first time a corresponding memory device 30 is used and/or otherwise disposed in communicative relation to the computer 20. The local encryption key data may be generated automatically, or at the request or authorization of the user 12. For example, the local key file 16 is created and random data representing the local encryption key data is generated by an algorithm or formula, and then saved in the local key file 16. The local key file 16 is then saved, stored, or otherwise disposed on the corresponding memory device(s) 30 and/or computer 20. Moreover, the local key file 16 is preferably stored using a random filename, title, or other designation. Additionally, in at least one embodiment, the local key file 16, itself, and/or general information about the local key file 16, including the filename and location, are stored on a password-protected database. As such, only users 12 having access to the password-protected database and/or the corresponding information contained therein, can identify the filename, location, and/or any other general information about the local key file 16.

Furthermore, the memory device(s) 30 of at least one embodiment of the present invention are structured to include or maintain various computer readable or executable software applications or programs, files, databases, etc. such that utilization of at least some of the software disposed on the corresponding computer 20 is not needed. In particular, and for exemplary purposes only, the memory device(s) 30 may include an internet explorer program structured to facilitate navigation of the World Wide Web. Accordingly, while the memory device(s) 30 is connected to a computer 20, a user 12 may utilize the internet explorer disposed on the memory device 30. In such an instance, the computer 20 will have no trace evidence of Internet navigation, as the Internet explorer software on the computer 20 was not utilized. It is'noted, however, that the memory device(s) 30 of the various embodiments of the present invention may include any software application, not merely the Internet navigation software just described. This may be particularly useful when utilizing the various features of the present invention on a public computer and/or another user's computer.

In addition, there are bound to be situations wherein at least one of the memory devices 30, such as a first memory device, becomes lost, stolen, damaged, misplaced, corrupted, or otherwise not accessible. In such a situation, the first memory device(s) 30 may be replaced or replicated, for example, by replacing at least some of the files, databases, and/or software contained thereon and saving them on a different or replacement memory device. Furthermore, the unique identifier, such as, for example, the unique serial number of the first memory device 30, may also be regenerated and/or reproduced. Accordingly, each computer 20 that was associated with the lost, stolen, damaged, or misplaced memory device 30 will also be associated with the replacement memory device. However, because of the strict randomness of the local encryption key data, in at least one preferred embodiment of the present invention, the local encryption key data cannot be subsequently reproduced or re-generated. Accordingly, once the replacement memory device 30 is initially connected to or otherwise disposed in communicative relation with the computer 20 so as to trigger the generation of local encryption key data, the newly generated local encryption key data will not likely be the same as the lost, misplaced, or stolen local encryption key data. If, however, the local encryption key data from the lost, stolen, corrupted, or misplaced memory device 30 was backed-up, copied, or otherwise saved in an accessible location, the backed-up data, or a copy of the data, such as a copy of the local key file 16, may be saved onto the replacement memory device and utilized as the local encryption key data. Thus, although the local encryption key data, in at least one embodiment, cannot be regenerated or reproduced, the data may be copied or otherwise backed-up for later use.

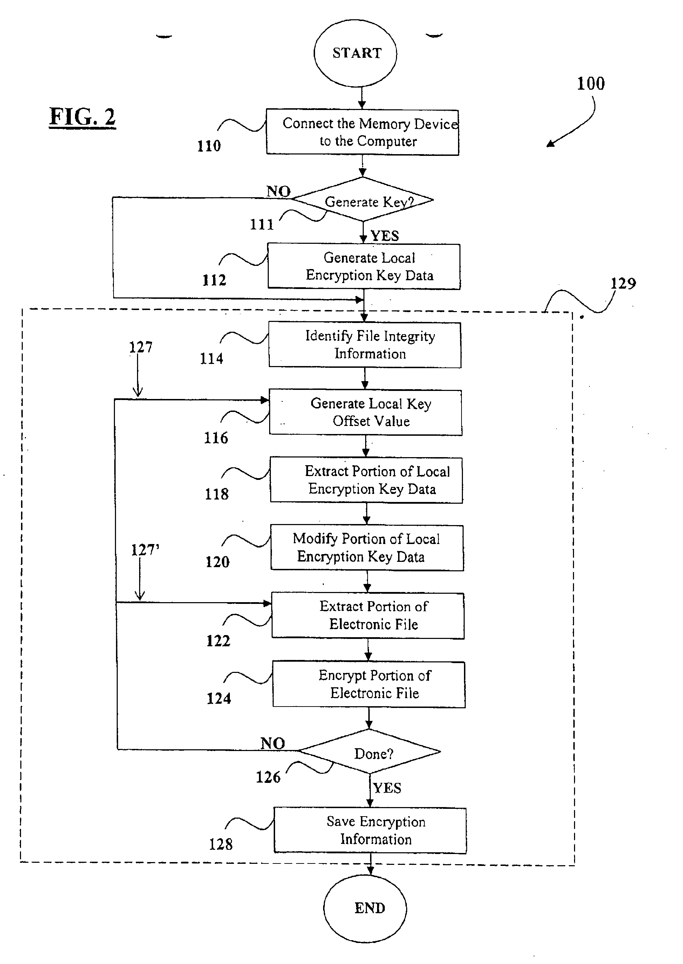

As shown in Figure 2, the present invention further includes a method of protecting the content of an electronic file, generally indicated as 100. At least one embodiment of the method 100 of the present invention includes the step of disposing the memory device(s) 30 in communicative relation with the computer 20, indicated as 110. As explained in detail above, if the memory device 30 is associated with the corresponding computer 20, in at least one embodiment, the user 12 need not identify himself or herself. However, should a user 12 connect his or her corresponding memory device 30 to a second computer, such as another user's computer, public computer, or a computer with which the memory device 30 is not associated, at least one password, or other identifying information must be communicated in order for the user 12 to access the computer 20 and/or the memory device 30. Accordingly, a user 12 may dispose a memory device 30 in communicative relation with any one of a plurality of computers 20 without sacrificing protection and/or encryption capabilities of the electronic file(s) 14. Specifically, because the memory device 30 comprises content including computer executable programs or applications, such as the encryption/decryption algorithm(s) or other electronic file protection software, as well as the corresponding local encryption key data, the electronic file 14 can be encrypted or decrypted while the memory device 30 is disposed in communicative relation with any one of a plurality of computers 20. Particularly, the electronic file protection software is executable while the memory device 30 is disposed in communicative relation with any one of a plurality of computers 20, whereas the computers 20 need not be correspondingly associated with the respective memory device 30.

Furthermore, at least one embodiment of the method 100 of the present invention further includes the step of generating local encryption key data, represented as 112. Specifically, a local key file is created and random data representing the local encryption key data is generated, for example, using one or more formulas or algorithms. The local encryption key data is saved or otherwise disposed within the local key file 16, and the local key file 16 is then saved to location, such as, on a corresponding memory device 30 or computer 20. More in particular, as mentioned above, in at least one embodiment of the present invention, the local encryption key data for a particular memory device 30 is generated one time only. In general, the local encryption key data is generated the first time a memory device 30 is connected to or otherwise disposed in communicative relation with a computer 20. However, in other embodiments of the present invention, the local encryption key data may be generated more than once and/or at various selected or random times. For example, although a particular memory device 30 may be connected to a computer 20, at least one embodiment will not generate the local encryption key data until the user 12 specifies to do so. Accordingly, as shown at conditional diamond 111 in Figure 2, the local encryption key data need not be generated each time a memory device 30 is connected to or otherwise disposed in communicative relation with a computer 20. Similarly, the local encryption key data need not be generated each time an electronic file 14 is encrypted.

At least one embodiment of the method 100 of the present invention further includes the step of identifying file integrity information, generally indicated as 114. In particular, the method 100 of at least one embodiment comprises the step of calculating a checksum value, or other appropriate redundancy check value, for the electronic file 14 to be encrypted. Specifically, when an electronic file 14 is encrypted and then subsequently decrypted, the integrity of the electronic file 14 may at least slightly diminish or otherwise be affected. Accordingly, the information obtained during the step of identifying file integrity information 114 may be used subsequent to decryption of the corresponding encrypted file as an attempt to locate, identify, or detect potential errors in the corresponding decrypted file.

Furthermore, still referring to Figure 2, the various embodiments of the present invention further include the step of generating a random local key offset value, represented as 116. The local key offset value is structured to represent a position located within the local key file 16 and/or the local encryption key data, the significance of which will be explained in greater detail below. Accordingly, depending upon the particular structure and/or organization of the local encryption key data located within the local key file 16, the offset value may be represented, for example, by one or more numbers, letters, columns, rows, and/or any combination thereof structured to facilitate the practice of the present invention in the intended fashion. More in particular, the offset value of at least one embodiment is generated by a predetermined formula or other calculation or software function which is structured to facilitate the generation or output of random data.

The method 100 of the present invention further includes the step of extracting a portion or set of a selected size from the local encryption key data, generally indicated as 118. In particular, the selected size of the portion or set of the local encryption key data may be predetermined at, for example, 256 bytes. However, any size structured to facilitate the practice of the present invention in the intended fashion may be implemented. As such, the portion or set of the local encryption key data may include the contents of the entire local key file 16 or any part therefrom.

Furthermore, in at least one embodiment of the present invention, the selected portion of the local encryption key data includes a contiguous portion beginning at a position within the local key file 16 at least partially defined by the offset value as described above. For exemplary purposes only, in the event the local encryption key 16 includes 1000 random characters, and the random offset value generated during encryption of a particular file is 300, then the selected portion or set of the local encryption key data includes a contiguous portion of the 1000 characters beginning at the 300th character. However, the portion or set of local encryption key data need not be contiguous relative to a starting point. Rather, the portion or set of local encryption key data may be non-contiguous blocks or bytes of data.

Moreover, in one embodiment, the step of extracting a portion of local encryption key data 118 may be defined as loading the selected portion of data into a file, variable, array, or other data structure which facilitates the utilization and/or manipulation of the selected portion of the local encryption key data. In addition, extracting a portion of the local encryption key data 118 may include detecting, indicating, or otherwise selecting the portion or set within the local key file 16, rather than loading the portion into a software data structure.

Further, the method 100 of one embodiment includes the step of modifying the extracted or selected portion of the local encryption key data, generally indicated as 120. For example, subsequent to extracting the portion or set of local encryption key data, the extracted portion is modified or otherwise encrypted utilizing a predetermined formula or set of formulas. As will be described below, the predetermined formula(s) is structured to modify one or more characters of the local encryption key data so as to provide additional security and/or protection to the contents of the finally encrypted file. The formula(s) may be structured to utilize one or more of the user's 12 passwords, such as, for example, the user's 12 logon or access password(s) for the computer 20 and/or the memory device 30, to modify or otherwise manipulate the data or characters of the selected portion of the local encryption key data. For example, the predetermined formula(s) of at least one embodiment of the present invention utilizes the user's 12 password needed to log onto, or otherwise access the various files, databases, programs, or other content of the corresponding memory device 30.

The various embodiments of the present invention further include extracting a portion of the electronic file to be encrypted, generally indicated as 122. Similar to extracting a portion of local encryption key data 118, in at least one embodiment, extracting a portion of the electronic file 122 includes loading the selected portion of data from the electronic file 14 into another file, a variable, an array, or other data structure which facilitates the utilization and/or manipulation of the selected portion of the electronic file 14. In addition, depending upon the particular size of the file or the embodiment of the present invention, the portion of a selected size from the electronic file 14 may include the entire file, or selected portions there from. Furthermore, in a preferred embodiment, the portion from the electronic file 14 includes a contiguous portion generally starting from the beginning of the file 14, or the beginning of a portion of the file 14 contiguous to a remainder thereof. However, it is contemplated that any starting point may be selected or otherwise implemented. In addition, the selected portion of the electronic file 14 need not be contiguous, and may, for example, include randomly selected bytes or portions therefrom.

Furthermore, the present invention includes the step of encrypting the selected portion of the electronic file, generally indicated as 124. More in particular, the encryption step(s) may be executed utilizing one or more look-up tables and/or one or more predetermined encryption formulas or algorithms. Particularly, in at least one embodiment of the present invention, the look-up table is defined as the portion or set of local encryption key data, as described above. However, the various embodiments of the present invention may utilize the modified portions of the local encryption key data as the look-up table.

Moreover, the predetermined encryption algorithms may include any formula or algorithm now known or later developed, such as, for example, the Data Encryption Standard ("DES"), Advanced Encryption Standard ("AES"), or any other encryption techniques, formulas, or implementations structured to facilitate the practice of the present invention in the intended fashion. For example, the encryption formula(s) or algorithm(s) may include several steps, one or more of which are structured and designed to utilize look-up table(s), as defined above.

In addition, at least one preferred embodiment of the present invention further includes repeating some or all of the various steps of the present invention, such as, for example, steps 116 through 124, unless and until the entire electronic file 14 is encrypted, or a predetermined portion, percentage, or section is encrypted. Accordingly, following conditional diamond 126 illustrated in Figure 2, if the encryption process is not completed, in at least one embodiment, a new local key offset value is generated, as shown at block 116 and junction 127. As such, a new portion of the local encryption key data is extracted, as at 118, and/or modified, as at 120. However, in yet another embodiment, following conditional diamond 126, if the encryption process is not completed, the original local key offset value and original portion from the local encryption key data is utilized. Accordingly, subsequent portions of the electronic file 14 are extracted, as shown at block 122 and junction 127', and encrypted.

In at least one embodiment, the present invention further includes saving various encryption information, including, but not limited to the random local key offset value(s), identification of one or more users 12, and/or file integrity information, generally indicated as 128. Further, the information is saved or otherwise disposed in a location such that future reference may be obtained, such as during the step of decrypting the file as explained below. For example, the information may be saved as a header, footer, or other predetermined or designated location within the encrypted file. It is also contemplated that the information is saved or disposed in a separate file, database, or any other location, preferably on the corresponding memory device 30.

As above, at least one embodiment of the present invention further includes the step of decrypting the encrypted file, or otherwise orienting the electronic file in a decrypted mode. Specifically, decrypting the file includes a decryption software application, decryption formula(s), and/or a set of formulas structured to at least partially regenerate the original electronic file 14. It should be apparent that the decryption software application may be the same program as the encryption software application, with various encryption and/or decryption features or options. In particular, at least one embodiment of the present invention requires a user 12 to identify himself or herself, for example by communicating second authentication data, such as a valid password prior to running or otherwise executing the encryption and/or decryption application(s) or algorithm(s). Furthermore, in at least one embodiment, the user 12 may instead or additionally be required to communicate third authentication data prior to selecting the electronic file 14 to be encrypted or decrypted, and/or prior to opening the finally decrypted file.

Further, the various embodiments of the decrypting step of the present invention include identifying the offset value generated during encryption of the electronic file 14. As above, in a preferred embodiment, the offset value is stored a header in the encrypted file, however, any location may be implemented. In addition, the step of decrypting the encrypted file includes locating and utilizing the local encryption key data that was used to encrypt the corresponding electronic file. If, for some reason, either the offset value or the local encryption key data cannot be located, accessed, or otherwise utilized, the step of decrypting the encrypted file will likely be extremely burdensome, if not impossible. This is due in part because of the uniqueness and non-reproducible nature of the local encryption key data, as well as the randomness of the starting point within the local encryption key data at least partially defined by the local key offset value.

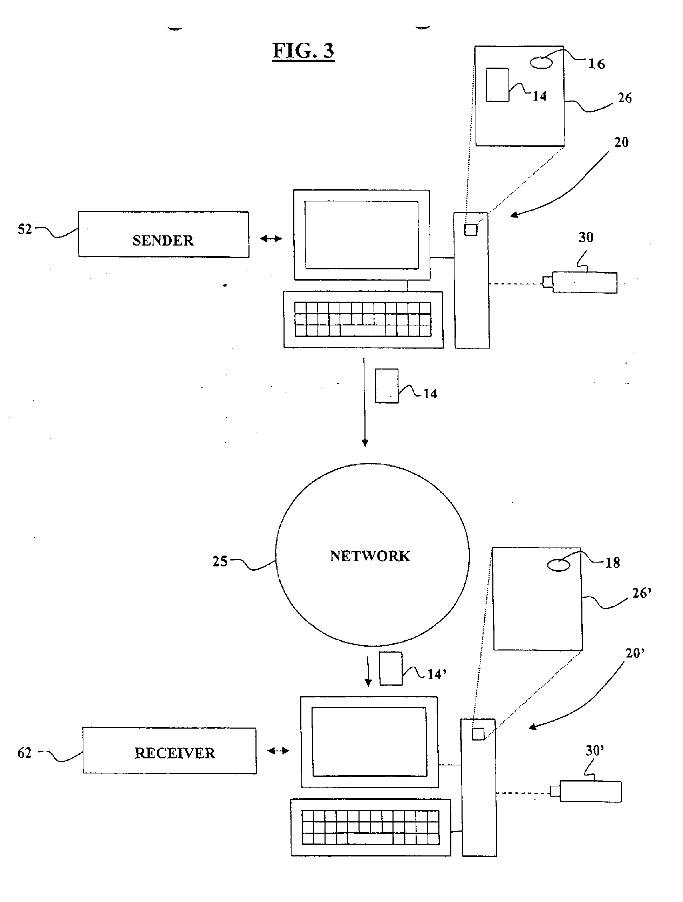

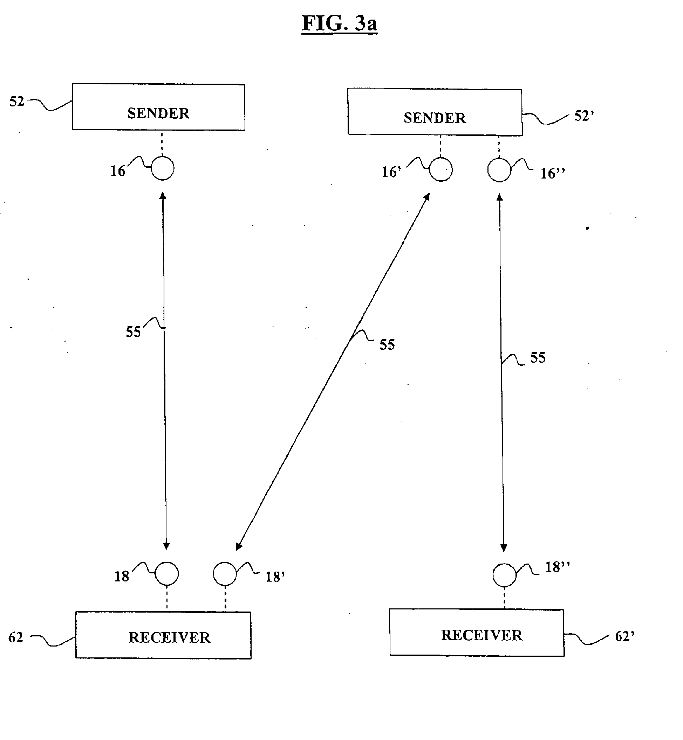

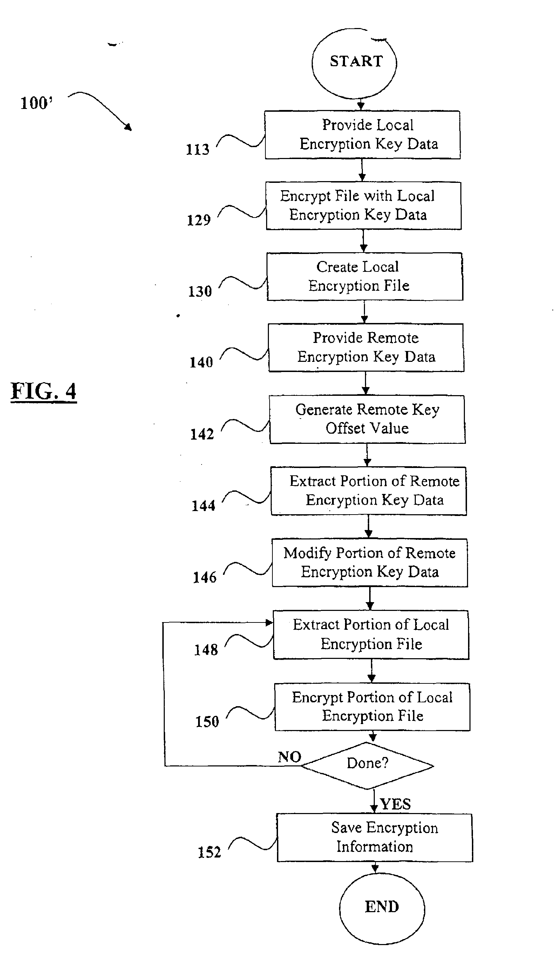

In yet another embodiment, as shown in Figures 3 and 4, the present invention further facilitates a user 12 securely sending or transferring an electronic file 14. For example, often times a user or sender 52, utilizing a computer 20 disposed in communicative relation with a network 25, must send one or more electronic files 14, 14' to another user or receiver 62. The sender 52 may send the file 14, 14' to the receiver 62 by utilizing virtually any method, such as, for example, electronic mail. Further, the receiver 62 may be utilizing a computer 20' which is different from the computer 20 used by the sender 52; however, the receiver 62 may instead subsequently logon to or otherwise utilize the same computer 20 as the sender 52 so as to receive the file 14, 14'. In addition, it is also contemplated that the sender 52 and the receiver 62 are the same individual or entity, such that a user may send an electronic file 14, 14' to himself or herself. Either way, sending an electronic file 14, 14' can be vulnerable to unwanted or unauthorized interception of the file 14, 14' and/or the contents therein. Accordingly, as will be described in detail below, as shown in Figure 4, the method of protecting one or more electronic files, generally indicated as 100', includes encrypting an electronic file 14, 14' by utilizing local encryption key data and remote encryption key data. In particular, the present invention includes local encryption key data correspondingly associated with the sender 52, and remote encryption key data correspondingly associated with the receiver 62. As above, the local encryption key data is maintained, held, or otherwise located within a computer-readable local key file 16. Similarly, the remote encryption key data is maintained, held, or otherwise located within a computer-readable remote key file 18. Moreover, in a preferred embodiment, the local and/or remote key file 16 and 18, respectively, may be disposed on or within the computer 20, 20' and/or a corresponding memory device 30, 30'. Either way, the local and remote encryption key data, in such an embodiment, are publicly accessible, or at least accessible by the sender 52, receiver 62, and/or a selected set of authorized users.

Specifically, the method 100' includes the step of providing one or more sets of local encryption key data, generally indicated as 113. Similar to the other various embodiments of the present invention, the local encryption key data may be generated at any predetermined time, such as, for example, the first time a user 12, such as sender 52, logs on to a computer 20, or the first time a user 12 connects a memory device 30 to a computer 20.

Furthermore, for simplicity purposes only, steps 114 through 128 shown in Figure 2 are illustrated as a single step in Figure 4, generally indicated as 129. Accordingly, in at least one embodiment, subsequent to encrypting the entire electronic file 14 a locally encrypted or intermediate file is created, as shown at 130. Further, as shown in Figure 4 at 140 through 152, a similar set of steps are implemented utilizing the remote encryption key data, rather than the local encryption key data. Specifically, the method 100' includes the step of providing one or more sets of remote encryption key data, generally indicated as 140. The remote encryption key data and/or remote key file 18 is preferably associated with the receiver 62 of the file 14, 14'. Furthermore, because the remote encryption key data is either publicly accessible or at least accessible by the sender 52, the method 100' of the present invention may utilize the remote encryption key'18 to further encrypt the file 14, 14', thereby providing added security and protection during transmission.

In yet another embodiment, the present invention includes separate and/or distinct sets of local and remote encryption key data combinations for each different sender 52 and receiver 62 combinations. Specifically, for illustrative purposes only, as shown in Figure 3a, arrows 55 represent three separate and distinct sender 52, 52' and receiver 62, 62' combinations. In the event sender 52 sends an electronic file to receiver 62, the electronic file will be encrypted using, in part, a set or portion of the local encryption key data from the local key file 16, and a set or portion of the remote encryption key data from the remote key file 18. Further, if sender 52' sends an electronic file to receiver 62, the electronic file will be encrypted using, in part, a set or portion of local encryption key data from local key file 16', and a set of remote encryption key data from remote key file 18'. Similarly, if sender 52' sends an electronic file to receiver 62', the electronic file will be encrypted using, in part, a set or portion of local encryption key data from local key file 16", and a set or portion of remote encryption key data from remote key file 18". Accordingly, each sender 52, 52' and receiver 62, 62' may have a plurality of local and/or remote key files corresponding to various sender/receiver combinations. As such, at least one embodiment of the method of the present invention includes associating each of the' local and remote encryption key data combinations with one of a plurality of separate sender and receiver combinations.

Still referring to Figure 4, at least one embodiment of the method 100' includes the step of generating a remote key offset value, generally indicated as 142. The remote key offset value is utilized much like the local key offset value in that it at least partially represents the starting point within the remote encryption key data. However, rather than generating a remote key offset value, the method 100' of another embodiment utilizes the local key offset value to represent the starting point within the remote encryption key data.

Further, the method 100' includes the step of extracting a portion or set of the remote encryption key data, generally indicated as 144. Similar to extracting a portion of the local encryption key data, the portion of the remote encryption key data may be a contiguous portion of a selected size, such as 256 bytes. However, any size may be implemented, and the portion need not be contiguous.

In addition, the portion of the remote encryption keydata, may, but need not be modified, as at 146. The method 100' of at least one embodiment includes a formula or a set of formulas structured to modify the portion of the remote encryption key data much like the portion of the local encryption key 16 may be modified as explained in detail above. In particular, the formula(s) to modify the remote encryption key data may be the same as or different from the formula(s) utilized to modify the local encryption key data.

The various embodiments of the present invention further include extracting a portion of the partially encrypted or intermediate file, as shown at 148, and encrypting the portion as shown at 150. The step of encrypting the extracted portion of the file includes utilizing a remote encryption formula or algorithm. In at least one embodiment, the remote encryption algorithm is substantially similar, if not identical to the local encryption formula or algorithm; however, the algorithms need not be similar in any fashion. Further, the various steps of the present invention may be repeated as necessary to encrypt the entire file, or designated portions thereof.

The present invention further includes the step of saving the remote encryption information, if necessary, such as, for example, the remote key offset value. Such information may be stored or otherwise disposed in a header or footer of the finally encrypted file, or in a selected destination accessible during decryption.

It should be apparent, however, that the various steps of the present invention need not be performed in any particular order or manner. For example, in at least one embodiment of the method 100, 100' of the present invention, rather than encrypting the entire electronic file utilizing a set or portion of local encryption key data, and then subsequently encrypting the entire file again utilizing a set or portion'of remote encryption key data, as shown in Figure 4, a portion of the file may be extracted, encrypted with the local encryption key data, and then encrypted with the remote encryption key data. The process is then repeated until the entire electronic file is encrypted, or selected/designated portions of the electronic file are encrypted. In such an embodiment, the step of creating a local encryption file need not be preformed.

Since many modifications, variations and changes in detail can be made to the described preferred embodiment of the invention, it is intended that all matters in the foregoing description and shown in the accompanying drawings be interpreted as illustrative and not in a limiting sense. Thus, the scope of the invention should be determined by the appended claims and their legal equivalents.

Now that the invention has been described,

## Claims

1. A method of protecting the content of an electronic file for sending and receiving, comprising:
providing unique local encryption key data correspondingly associated with a sender,
providing unique remote encryption key data correspondingly associated with a receiver, and
orienting the electronic file in an encrypted mode by utilizing at least one set of the unique local encryption key data, at least one set of the remote encryption key data, and at least one encryption algorithm.

2. A method as recited in claim 1 comprising disposing the unique local encryption key data within a local key file.

3. A method as recited in claim 1 comprising disposing the unique remote encryption key data within a remote key file.

4. A method as recited in claim 1 comprising defining the unique local encryption key data as being random data.

5. A method as recited in claim 1 comprising defining the unique remote encryption key data as being random.

6. A method as recited in claim 1 comprising disposing the unique local encryption key data in an accessible relation to the receiver.

7. A method as recited in claim 6 comprising disposing the unique remote encryption key data in an accessible relation to the sender.

8. A method as recited in claim 1 comprising defining the at least one set of unique local encryption key data as a random set of data from the unique local encryption key data.

9. A method as recited in claim 8 comprising defining the at least one set of unique remote encryption key data as a random set of data from the unique remote encryption key data.

10. A method as recited in claim 9 further comprising generating a random local key offset value.

11. A method as recited in claim 10 comprising utilizing the random local key offset value to at least partially define the at least one set of unique local encryption key data.

12. A method as recited in claim 11 comprising utilizing the random local key offset value to at least partially define the at least one set of unique remote encryption key data.

13. A method as recited in claim 11 comprising defining the at least one set of unique local encryption key data as a contiguous set of data from the unique local encryption key data.

14. A method as recited in claim 11 comprising saving the random local key offset value.

15. A method as recited in claim 11 comprising generating a random remote key offset value.

16. A method as recited in claim 15 comprising utilizing the random remote key offset value to at least partially define the at least one set of unique remote encryption key data.

17. A method as recited in claim 16 comprising saving the random remote key offset value.

18. A method as recited in claim 1 comprising providing a plurality of separate local and remote encryption key data combinations.

19. A method as recited in claim 18 comprising associating each of the local and remote encryption key data combinations with one of a plurality of separate sender and receiver combinations.

20. A method as recited in claim 19 comprising orienting the electronic file in an encrypted mode by utilizing the corresponding local and remote encryption key data combination associated with the corresponding sender and receiver combination.

21. A method of protecting the content of an electronic file for sending and receiving, comprising:
providing unique local encryption key data correspondingly associated with a sender,
providing unique remote encryption key data correspondingly associated with a receiver,
selecting at least one random set of local encryption key data,
modifying the at least one random set of local encryption key data,
selecting at least one random set of remote encryption key data,
modifying the at least one random set of remote encryption key data,
encrypting a selected portion of the electronic file utilizing the modified set of local encryption key data, the modified set of remote encryption key data, and at least one encryption algorithm.

22. A method as recited in claim 21 comprising disposing the unique local encryption key data and the unique remote encryption key data in an accessible relation to the sender and receiver.

23. A method as recited in claim 21 comprising providing a plurality of unique local and remote encryption key data combinations.

24. A method as recited in claim 23 comprising associating each of the local and remote encryption key data combinations with one of a plurality of different sender and receiver combinations.

25. A method as recited in claim 24 comprising encrypting the selected portion from the electronic file utilizing the corresponding local and remote encryption key data combination associated with the corresponding sender and receiver combination.

26. A system of protecting the content of an electronic file for sending and receiving, comprising:
a local key file having unique, non-reproducible local encryption key data,
said unique, non-reproducible local encryption key data being associated with a sender of the electronic file,
a remote key file having unique, non-reproducible remote encryption key data,
said unique, non-reproducible remote encryption key data being associated with a receiver of the electronic file,
said unique, non-reproducible local encryption key data being disposed in an accessible relation to the receiver,
said unique, non-reproducible remote encryption key data being disposed in an accessible relation to the sender,
at least one random local key offset value structured to at least partially define a set of said unique, non-reproducible local encryption key data,
at least one random remote key offset value structured to at least partially define a set of said unique, non-reproducible remote encryption key data,
at least one encryption algorithm structured to orient the electronic file in an encrypted mode.

27. A system as recited in claim 26 wherein said encryption algorithm utilizes said set of said unique, non-reproducible local encryption key data to orient the electronic file in said encrypted mode.

28. A system as recited in claim 26 wherein said encryption algorithm utilizes a modified set of said unique, non-reproducible local encryption key data to orient the electronic file in said encrypted mode.

29. A system as recited in claim 27 wherein said encryption algorithm utilizes said set of said unique, non-reproducible remote encryption key data to orient the electronic file in an encrypted mode.

30. A system as recited in claim 27 wherein said encryption algorithm utilizes a modified set of said unique, non-reproducible remote encryption key data to orient the electronic file in said encrypted mode.

31. A system as recited in claim 26 further comprising a plurality of local and remote encryption key data combinations.

32. A system as recited in claim 31 wherein each of said local and remote encryption key data combinations are correspondingly associated with a different one of a plurality of sender and receiver combinations.
